# EUROPEAN PATENT APPLICATION

(11) **EP 2 017 778 A1**
(43) Date of publication of application: **21.01.2009**
(21) Application number: 08159198.4
(22) Date of filing: 27.06.2008
(51) Int. Cl.: G06Q 10/00

(54) **Method and device for processing e-mail**

(30) Priority: 27.06.2007 CN 200710122702; 23.05.2008 WO PCT/CN2008/071060
(71) Applicant: Huawei Technologies Co., Ltd., Longgang District, Shenzhen Guangdong 518129 (CN)
(72) Inventor: Li, Hongxin, Huawei Administration Building, Bantian, Shenzhen Guangdong, 518129 (CN); Huang, Shanson, Huawei Administration Building, Bantian, Shenzhen Guangdong 518129 (CN)
(74) Representative: Hengelhaupt, Jürgen

(57) **Abstract**

The invention discloses a method and a device for processing an e-mail. The method includes: obtaining a user ID of a required user; obtaining location information corresponding to the user ID by looking up an e-mail; recording the location information in a pre-defined attribute tag of the e-mail; and processing a plurality of e-mails in accordance with the attribute tags. The device includes a user ID obtaining unit, a location information obtaining unit, a location information recording unit and a processing unit.

## Description

This application claims the priority of Chinese patent application No. 200710122702.7, entitled "METHOD AND DEVICE FOR PROCESSING E-MAIL", filed on June 27, 2007, and the priority of International patent application No. PCT/CN2008/071060, entitled "METHOD AND DEVICE FOR PROCESSING E-MAIL", filed on May 23, 2008, which are incorporated herein by reference in its entirety.

### FIELD OF THE INVENTION

The present invention relates to the field of E-mail technologies, and in particular, to a method and a device for processing an e-mail.

### BACKGROUND OF THE INVENTION

E-mail refers to an electrical information carrier transferred through Internet, which may transfer various contents such as literals, images, voices and/or videos, and is referred to as mail or e-mail. Each mailbox for sending and receiving e-mails has a unique e-mail address in Internet, the typical format of which is "username@domain-name". Users may use the e-mail on an e-mail client or a Web browser. As a most popular service in Internet, e-mail changes people's life greatly.

In order to facilitate the management of e-mail, e-mails need to be processed and displayed under categories in accordance with different attribute tags. The implementation in the prior art typically is as follows: in an inbox, the displaying under categories is typically supported in accordance with attribute tags of a priority level, attachment, read or not, sender, subject, receiving time, size and sending time, etc; similarly, in an outbox and a draft-box, the displaying under categories is typically supported in accordance with attribute tags of a priority level, attachment, receiver, subject, sending time, and size, etc.

In the case that the amount of e-mails is not large, the user may display, in folders such as the inbox or outbox, these e-mails by classification in accordance with different user IDs within the attribute tags of the senders or receivers to look up a target e-mail. However, in the process of implementing the invention, the inventor finds that if there are a large amount of e-mails, and a same sender or receiver has many e-mails, it is not possible for the e-mail receiver to look up the e-mails in which he/she is at the location of "To", "Carbon Copy (Cc)" or "Blind Carbon Copy (Bcc)", and the e-mail sender is also unable to look up the e-mails in which a certain receiver is at the location of "To", "Cc" or "Bcc", instead, he/she has to open the E-mails one by one to find the target e-mail. According to the habit of a general user, a user at the location of "From" is a creator of an e-mail who provides contents of the e-mail; a user at the location of "To" is the target of the e-mail who is responsible for processing the e-mail, feeding back and responding; a user at the location of "Cc" is the object needed to be informed, who only needs to understand the E-mail without processing, feeding back and responding; a user at the location of "Bcc" is a special object needed to be informed of the e-mail, who only needs to understand the E-mail, and the users at the location of "To" or "Cc" are unable to see that this e-mail has already sent to the "Bcc" privately. Therefore, in the case of a large amount of e-mails, if the user opens all the e-mails one by one to check, the working efficiency will be reduced.

### SUMMARY OF THE INVENTION

Embodiments of the invention provide a method and a device for processing an e-mail, so as to improve the working efficiency of a user in processing a large amount of e-mails.

An embodiment of the invention provides a method for processing an e-mail, including:

obtaining a user ID of a required user;

obtaining location information corresponding to the user ID by looking up an e-mail;

recording the location information into a pre-defined attribute tag of the e-mail; and

processing a plurality of e-mails in accordance with the attribute tag.

An embodiment of the invention further provides an e-mail terminal device, including:

a user ID obtaining unit adapted to obtain a user ID of a required user;

a location information obtaining unit adapted to obtain location information corresponding to the user ID obtained by the user ID obtaining unit through looking up an e-mail;

a location information recording unit adapted to record the location information obtained by the location information obtaining unit into a pre-defined attribute tag of the e-mail; and

a processing unit, adapted to process a plurality of e-mails in accordance with the attribute tag.

An embodiment of the invention further provides a computer readable storage medium containing computer program code which is executed by a terminal device, for triggering the terminal device to execute the following steps of:

obtaining a user ID of a required user;

obtaining location information corresponding to the user ID by looking up an e-mail;

recording the location information into a pre-defined attribute tag of the e-mail; and

processing a plurality of e-mails in accordance with the attribute tag.

It can be seen from the above technical solutions, in an embodiment of the invention, by obtaining a user ID of a required user, obtaining location information corresponding to the user ID from the e-mail, and setting the location information in a pre-defined attribute tag, a plurality of e-mails may be classified in accordance with different location information in the attribute tag; therefore, the e-mails are classified more clearly. In the case of a large amount of e-mails, the user may know location information corresponding to an e-mail without opening the e-mail; therefore, the target e-mail may be selected rapidly and processed and responded differently as required, which can improve the working efficiency of the user in processing a large amount of e-mails.

### BRIEF DESCRIPTION OF THE DRAWINGS

Figure 1 is a flow chart of a method for processing an e-mail according to a first embodiment of the invention;

Figure 2 is a flow chart of a method for processing an e-mail according to a second embodiment of the invention;

Figure 3 is a flow chart of a method for processing an e-mail according to a third embodiment of the invention;

Figure 4 is a schematic structural diagram of an e-mail terminal device according to a fourth embodiment of the invention;

Figure 5 is a schematic structural diagram of an e-mail terminal device according to a fifth embodiment of the invention;

Figure 6 is a schematic structural diagram of an e-mail terminal device according to a sixth embodiment of the invention; and

Figure 7 is a schematic structural diagram of an e-mail terminal device according to a seventh embodiment of the invention.

### DETAILED DESCRIPTION OF THE EMBODIMENTS

The embodiments of the invention will be described in detail with reference to drawings to make objects, technical solutions and advantages of the invention more apparently.

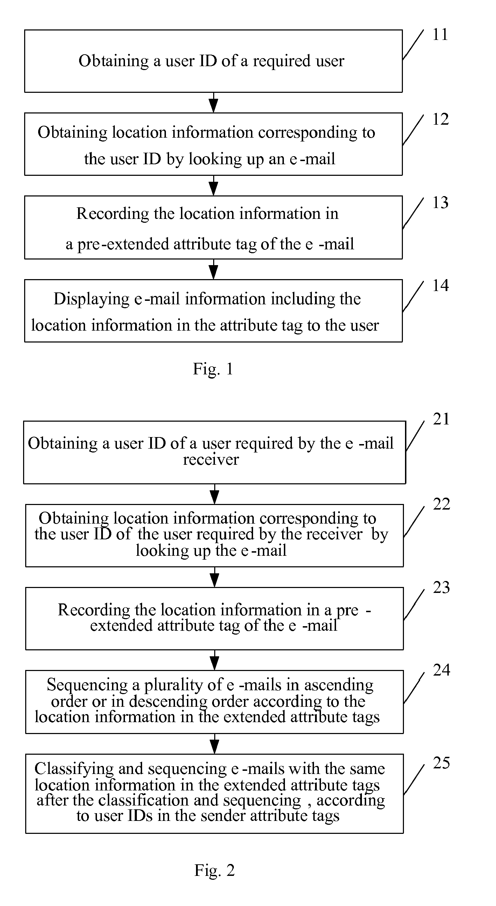

Figure 1 is a flow chart of a method for processing an e-mail according to a first embodiment of the invention. In this embodiment of the invention, location information corresponding to a user ID may be obtained according to an e-mail, and recorded in a pre-defined attribute tag. As a result, when a user needs to process a plurality of e-mails, he/she may know how to process the e-mail simply according to the location information in the attribute tag without opening the e-mail. With this technical solution, the working efficiency of the user in processing a large amount of e-mails may be improved. The specific implementation thereof may be described in the following steps.

In step 11, a user ID of a required user is obtained.

The required user may be designated by a user or generated according to the rules of the folder including the e-mail. For example, when the user looks up an e-mail associated with the designated user by using e-mail search function, the required user is the searched user designated by the user. In particular, if searching in an inbox, the default is the sender; and if searching in an outbox, the default is the e-mail receiver. In the inbox, the required user generally refers to an e-mail receiver according to a default rule; in other user-defined folders, the required user may also be designated by the user.

The user ID of a user may be an identification representing a unique user, such as a username or a user mail address.

In step 12, location information corresponding to the user ID is obtained by looking up an e-mail.

The e-mail may be looked up at any time of creating an e-mail, sending an e-mail, receiving an e-mail or looking up an e-mail. By looking up the e-mail, the information of locations, namely, "From", "To", "Cc" and "Bcc", of the user ID of the required user may be obtained.

In step 13, the location information is set in a pre-defined attribute tag of the e-mail.

The pre-defined attribute tag represents the location information of the required user in the e-mail, which may be represented as "TAG"; and the location information may include at least one of "From", "To", "Cc" and "Bcc".

Optionally, the following step may be further included.

In step 14, e-mail information including the location information in the attribute tag is displayed to the user.

Preferably, on the basis of the above embodiment, the method may further include the step of processing a plurality of e-mails according to the attribute tag after the step 13. The particular process thereof is described as follows.

In the case of a plurality of e-mails, the user may arrange those e-mails with the same location information in their attribute tags into one category. For example, in the inbox, the e-mail receiver arranges the e-mails in which he/she is at the location of "To" into one category, arranges the e-mails in which he/she is at the location of "Cc" into one category, and arranges the e-mails in which he/she is at the location of "Bcc" into another category. In this way, centralized processing of the e-mails with the same location information in their attribute tags may be implemented by the user, or more important e-mails may be preferentially processed according to priorities or in time sequence. For example, in the inbox, the user processes, feeds back or responds to the e-mails in which he/she is located at "To" in time, while only needs to understand those e-mails in which he/she is located at "Cc" or "Bcc". In the case of processing a large amount of e-mails, the user may determine the sequence of opening of e-mails according to his/her location information in "TAG" of the e-mail, so as to improve the working efficiency.

It can be seen from above that, by obtaining a user ID of a required user, obtaining location information corresponding to the user ID by looking up an e-mail, and recording the location information in a pre-defined attribute tag of the e-mail, the user may know clearly whether to check the e-mail or process the e-mail in detail according to the location information displayed in the attribute tag. As a result, it is not necessary for the user to open some e-mails, which may improve the working efficiency for the user with a large amount of e-mails to be processed.

In order to process the e-mails more efficiently, the user may classify a plurality of e-mails according to different location information in the pre-defined attribute tag of TAG. For example, in the inbox, the e-mail receiver arranges all the e-mails in which he/she is at the location of "To" into one category, arranges the e-mails in which he/she is at the location of "Cc" into a further category, and arranges the e-mails in which he/she is at the location of "Bcc" into another category. In this way, centralized processing of the e-mails with the same location information in their attribute tags may be implemented by the user, or more important e-mails may be preferentially processed according to priorities or in time sequence. For example, in the inbox, the user processes, feeds back or responds to the e-mails in which he/she is located at "To" in time, while only needs to understand those e-mails in which he/she is located at "Cc" or "Bcc". In the case of processing a large amount of e-mails, the user may determine the sequence of opening of e-mails according to his/her location information in "TAG" of the e-mail, so as to improve the working efficiency.

The location information in the attribute tags may also be sequenced. For example, different categories of e-mail information may be sequenced in a descending order as "To"-> "Cc"->"Bcc", or in an ascending order as "Bcc"->"Cc"->"To". Of course, the ascending order and descending order may be pre-defined as required by the user.

In the above method of processing e-mails, the classification and sequencing based on different location information in the extended TAGs may also be performed in conjunction with the method of classification and sequencing based on other attribute tags, to make the classification information of the e-mails more clearly, and thus may facilitate the user to process the e-mails, so as to further improve his/her working efficiency. Hereinafter, it will be described in detail with reference to the second and the third embodiments of the method for processing an e-mail.

Figure 2 is a flow chart of the method for processing an e-mail according to a second embodiment of the invention. The following description is made under the example of a method for processing an e-mail in an inbox. The method includes the following steps.

In step 21, a user ID of a required user is obtained.

In the inbox, the required user is commonly the e-mail receiver.

In step 22, location information corresponding to the user ID is obtained by looking up an e-mail.

The location information corresponding to the user ID of the e-mail receiver may include any one of "To", "Cc" and "Bcc".

In step 23, the location information is recorded in a pre-defined attribute tag of the e-mail.

In step 24, a plurality of e-mails is sequenced in an ascending order or in a descending order according to different location information in the extended attribute tags.

To facilitate the centralized processing of the e-mails with the same location information attribute in the extended attribute tag, the user may further sequence, according to categories, the e-mails which have been classified according to the location information in the attribute tags. The e-mails may be sequenced in an ascending order, or in a descending order. The sequence of various categories may be changed according to a triggering instruction of the user.

In step 25, the e-mails, after sequencing, with the same location information in the extended attribute tags are further classified and sequenced according to user IDs in the sender attribute tags.

After the first classification and sequencing according to the location information in the extended attribute tags in step 24, a secondary sequencing may be performed to make the user find the e-mail to be processed rapidly, so as to improve the working efficiency. In particular, the e-mails with the same extended attribute tags in step 24 may be further classified and sequenced according to user IDs in the sender attribute tags.

Referring to mail list 1, the e-mails are firstly classified and sequenced according to the location information in pre-defined attribute tags, and then the sequenced e-mails may be secondarily classified and sequenced according to user IDs in the sender attribute tags. It may be seen clearly that, those e-mails with the same e-mail location information of "To" are sequenced in a sequence of senders as "user 1-> user 2-> user3", and in this way, the user may select an e-mail and process the selected e-mail more rapidly, thus improving the efficiency of processing of the e-mails.

**Mail list 1**

| | | | |
|---|---|---|---|
| TAG | Sender | Subject | ... |
| To | User 1 | Subject 1 | ... |
| To | User 1 | Subject 2 | ... |
| To | User 2 | Subject 3 | ... |
| To | User 3 | Subject 4 | ... |
| Cc | User 1 | Subject 1 | ... |
| Cc | User 1 | Subject 2 | ... |
| Bcc | User 1 | Subject 1 | ... |
| Bcc | User 2 | Subject 2 | ... |

In the inbox, the user may firstly sequence the e-mails according to the location information in the extended attribute tags, and then sequence secondarily the e-mails according to the attribute tags of receiving times. This method for processing e-mails is generally the same as that in the second embodiment, and here will not be described any more.

In fact, the e-mails may also be processed firstly according to other attribute tags, and then the e-mails in a same category may further be processed according to the location information in the extended TAGs.

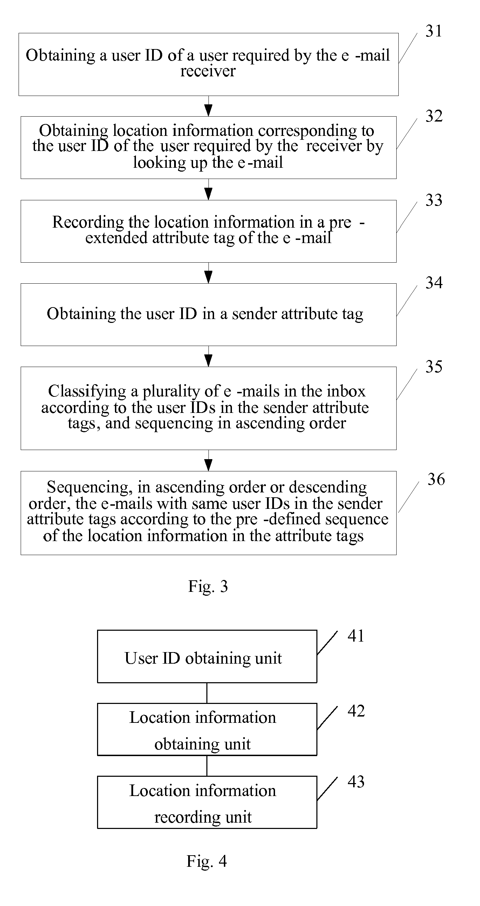

Figure 3 is a flow chart of the method for processing an e-mail according to a third embodiment of the invention. The following description is also made under the example of a method for processing an e-mail in an inbox. The method includes the following steps.

In step 31, a user ID of a required user is obtained.

In the inbox, the default of required user is generally the e-mail receiver, and the user ID may be an identifier uniquely representing the user such as the username and the e-mail address of the user.

In step 32, location information corresponding to the user ID is obtained by looking up an e-mail.

The location information corresponding to the user ID of the e-mail receiver may include any one of "To", "Cc" and "Bcc".

In step 33, the location information is recorded in a pre-defined attribute tag of the e-mail.

In step 34, the user ID in a sender attribute tag is obtained.

The user ID in the sender attribute tag may be a username or a user e-mail address.

In step 35, a plurality of e-mails in the inbox is classified according to the user IDs in the sender attribute tags, and sequenced in an ascending order.

It may be referred to the first column in mail list 2 in particular.

In step 36, the e-mails with the same user IDs in the sender attribute tags are sequenced then, in an ascending order or a descending order, according to the pre-defined sequence of the location information in the attribute tags.

For example, the e-mails with the sender attribute tags of "User 1" may further be classified into three categories as "To", "Cc" and "Bcc" according to location information in the TAGs. The sequence of the e-mails with different location information in the attribute tags may be pre-defined, for example, the e-mails with the sender attribute tag of "User 1" are sequenced in an order of "To"->"Cc"->"Bcc" in the second column of the mail list 2.

**Mail list 2**

| Sender | TAG | Subject | ... |
|---|---|---|---|
| User 1 | To | Subject 1 | ... |
| User 1 | To | Subject 2 | ... |
| User 1 | To | Subject 3 | ... |
| User 1 | Cc | Subject 1 | ... |
| User 1 | Cc | Subject 2 | ... |
| User 1 | Bcc | Subject 1 | ... |
| User 1 | Bcc | Subject 2 | ... |
| User 2 | To | Subject 1 | ... |

The method for processing an e-mail in the outbox is similar, i.e., the e-mails may also firstly be classified and sequenced according to the user IDs in receiver attribute tags; and the e-mails with the same user IDs may further be classified and sequenced according to the location information in extended TAGs; and it will not be described here again.

Of course, tertiary or more classification and sequencing may be implemented on the e-mails according to the location information in the extended attribute tags together with attribute information in other attribute tags, the rules of which are similar to that of the secondary sequencing, and will not be described here again.

After the above processing, the e-mails in each category may be folded or unfolded based on the provided triggering instructions. For example, in the mail list 1, all the e-mails with the location information of "To" in TAG may be folded into one line for display when being triggered, and unfolded as four lines in the mail list for display when being triggered again.

In order to simplify the display interface, it is possible to only display the e-mail information with the attribute tag of "To" in TAG. For example, in the outbox, only the users with the attribute tag of "To" in the extended TAG, rather than the users at the location of "Cc" and "Bcc" are displayed in the receiver attribute tag list. However, if "To", "Cc" and "Bcc" are displayed in the "TAG" list, it represents that a user exists at the corresponding location. Referring to the mail list 3, the information in the second line of TAG is "To/Cc/Bcc", which represents that a user exists at each of the corresponding locations. "To1/To2" is displayed in the corresponding receiver attribute list, which represents the location information in TAG of To 1 and To2 is "To"; and the user ID in "Cc/Bcc" is not displayed.

**Mail list 3**

| TAG | Sender | Subject | ... |
|---|---|---|---|
| To/Cc/Bcc | To1/To2 | Subject 1 | ... |
| To/Cc | To1 | Subject 2 | ... |
| Cc/Bcc | | Subject 3 | ... |
| Cc | | Subject 4 | ... |
| To/Cc | To5 | FW: Subject 1 | ... |
| To/Bcc | To1 | FW: Subject 2 | ... |
| To/Bcc | To1 | FW: Subject 1 | ... |
| To/Cc/Bcc | To2/To6 | FW: Subject 2 | ... |

The location information in the extended attribute tag, "TAG", of each e-mail may also be displayed as an icon, and the location information may be differentiated by different icons or different locations of the icons.

The method for processing an e-mail is described in detail as above. Hereinafter, an e-mail terminal device may be described in detail with reference to the drawings according to an embodiment of the invention.

Figure 4 is a schematic structural diagram of an e-mail terminal device according to a fourth embodiment of the invention. The e-mail terminal device includes a user ID obtaining unit 41, a location information obtaining unit 42 and a location information recording unit 43.

The user ID obtaining unit 41 is adapted to obtain a user ID of a required user.

The location information obtaining unit 42 is adapted to obtain location information corresponding to the user ID obtained by the user ID obtaining unit 41 by looking up an e-mail.

The location information recording unit 43 is adapted to record the location information obtained by the location information obtaining unit 42 into a pre-defined attribute tag of the e-mail.

Preferably, the e-mail terminal device in this embodiment may include a user ID obtaining unit, a location information obtaining unit, a location information recording unit and a processing unit. In particular, the processing unit is adapted to process a plurality of e-mails in accordance with the location information in the attribute tags recorded by the location information recording unit. The functions and actions of the user ID obtaining unit, the location information obtaining unit and the location information recording unit are the same as each corresponding unit in Figure 4, and will not be described here any more.

In particular, the location information in the extended attribute tag may include at least one of "From", "To", "Cc" and "Bcc".

By using the e-mail terminal device, the classification of the e-mails may be much clearer by processing the e-mails. In the case of a large amount of e-mails, the user may know the location information corresponding to the e-mail without opening the e-mail, and therefore may select out the required e-mails rapidly and make corresponding processing and response to the e-mails as required. As a result, the working efficiency of the user in processing a large amount of e-mails may be improved.

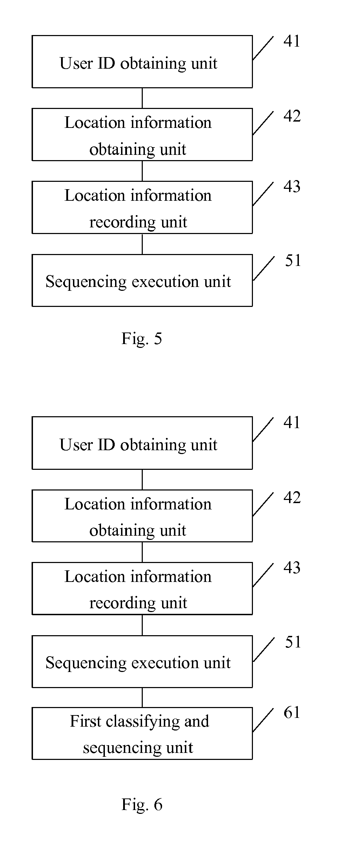

Figure 5 is a schematic structural diagram of an e-mail terminal device according to a fifth embodiment of the invention. This e-mail terminal device differs from the device in the fourth embodiment in that, the processing unit in this e-mail terminal device includes a sequencing execution unit 51 adapted to sequence a plurality of e-mails in an ascending order or in a descending order according to the location information, recorded by the location information recording unit 43, in the attribute tags of the plurality of e-mails.

Figure 6 is a schematic structural diagram of an e-mail terminal device according to a sixth embodiment of the invention. On the basis of the fourth embodiment, the device in the sixth embodiment further includes a first classifying and sequencing unit 61 adapted to classify the e-mails which have been sequenced by the sequencing execution unit 51 according to one of the attribute tags of sender, receiver, sending time and receiving time, and to sequence the e-mails in an ascending order or in a descending order. Preferably, the first classifying and sequencing unit may be integrated into the processing unit.

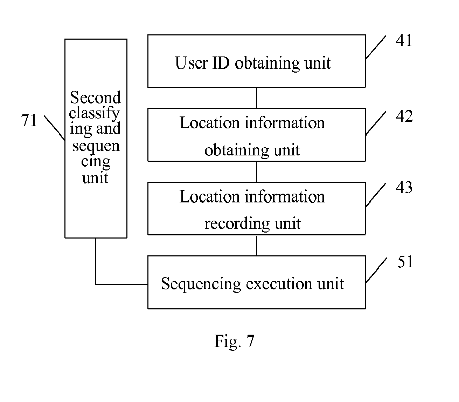

Figure 7 is a schematic structural diagram of an e-mail terminal device according to a seventh embodiment of the invention. On the basis of the fifth embodiment, the device in the seventh embodiment may further include a second classifying and sequencing unit 71 adapted to classify and sequence a plurality of e-mails according to user IDs in the sender/receiver attribute tags, and to send the e-mails with the same user ID in the sender/receiver attribute tags to the sequencing execution unit 51. Preferably, the second classifying and sequencing unit may be integrated into the processing unit.

Preferably, in the embodiment, on the basis of Figure 7, the e-mail terminal device may further include an obtaining unit adapted to obtain the user ID in the sender or receiver attribute tag. The second classifying and sequencing unit classifies and sequences a plurality of e-mails according to the user IDs, which are obtained by the obtaining unit, in the sender or receiver attribute tags, and sends the e-mails with the same user IDs in the sender or receiver attribute tags to the sequencing execution unit.

It can be seen from the sixth and seventh embodiments, the user may find in time a required e-mail by taking multi-level sequencing of a plurality of e-mails using the e-mail terminal device, and may process and respond to the e-mail correspondingly.

It may be understood by those skilled in the art that all or part of the steps in the method for processing an e-mail in the above embodiments may be implemented by a program instructing a related hardware. The program may be stored in a computer readable medium and the following steps may be included when executing the program.

A user ID of a required user is obtained.

Location information corresponding to the user ID is obtained by looking up an e-mail.

The location information is recorded in a pre-defined attribute tag of the e-mail.

A plurality of e-mails are processed in accordance with the attribute tags.

The storage medium may be a ROM/RAM, a diskette or a compact disk.

It can be seen from the method for processing an e-mail and the e-mail terminal device in the above embodiments of the invention that the technical solutions in the embodiments may provide the following advantageous effects:

By obtaining a user ID of a required user, then obtaining location information corresponding to the user ID by looking up an e-mail, and recording the location information in a pre-defined attribute tag of the e-mail, a plurality of e-mails may be classified according to location information in the attribute tags, which makes the classification of the e-mails more clearly. In the case of a large amount of e-mails, the user may know location information corresponding to an e-mail without opening the e-mail, so that the target e-mail may be selected out rapidly, and the e-mail may be processed and responded as required. In this way, the working efficiency of the user in processing a large amount of e-mails may be improved.

The classification of e-mails may be much clearer by performing a multi-level classification and sequencing for the e-mails, thus further improving the user's working efficiency.

The method and device for processing an e-mail are described in detail with reference to the above embodiments, the illustration of which is simply used for benefiting the understanding of the method and the idea of the invention; accordingly, the implementation and the application scope of the invention may be changed by those skilled in the art in accordance with the idea of the invention. In conclusion, the contents of the description shall not be interpreted as a limitation to the invention.

## Claims

1. A method for processing an e-mail, comprising:
obtaining a user ID of a required user;
obtaining location information corresponding to the user ID by looking up an e-mail;
setting the location information in a pre-defined attribute tag of the e-mail; and
processing a plurality of e-mails in accordance with the attribute tags.

2. The method for processing an e-mail according to claim 1, wherein the required user is designated by a user or generated according to a rule of a folder comprising the e-mail.

3. The method for processing an e-mail according to claim 1, wherein the processing of a plurality of e-mails in accordance with the attribute tags comprises:
sequencing the plurality of e-mails in an ascending order or in a descending order according to the location information in the attribute tags.

4. The method for processing an e-mail according to claim 3, wherein the processing of a plurality of e-mails in accordance with the attribute tags further comprises,
classifying the e-mails with the same location information in the attribute tags according to any one of the attribute tags of sender, receiver, sending time and receiving time, and sequencing the classified e-mails in an ascending order or in a descending order.

5. The method for processing an e-mail according to claim 1, further comprising the step of obtaining a user ID in a sender or receiver attribute tag; wherein,
the processing of a plurality of e-mails in accordance with the attribute tags comprises;
classifying the plurality of e-mails according to user IDs in the sender or receiver attribute tags; and
sequencing, in an ascending order or in a descending order, the e-mails with the same user IDs in the sender or receiver attribute tags according to location information in the attribute tags.

6. The method for processing an e-mail according to any one of claims 1 to 5, wherein the location information comprises at least one of "From", "To", "Carbon Copy" and "Blind Carbon Copy".

7. A computer program product, **characterised in**, comprising computer program code, which, when executed by a computer unit, will cause the computer unit to perform the method according to any one of claims 1 to claim 6.

8. An e-mail terminal, comprising:
a user ID obtaining unit adapted to obtain a user ID of a required user;
a location information obtaining unit adapted to obtain location information corresponding to the user ID of a required user by looking up an e-mail;
a location information recording unit adapted to set the location information in a pre-defined attribute tag of the e-mail; and
a processing unit adapted to process a plurality of e-mails in accordance with the attribute tags.

9. The e-mail terminal according to claim 8, wherein the processing unit comprises:
a sequencing execution unit adapted to sequence the plurality of e-mails in an ascending order or in a descending order according to the location information recorded in the pre-defined attribute tags of the e-mails.

10. The e-mail terminal device according to claim 9, wherein the processing unit further comprises:
a first classifying and sequencing unit adapted to classify the e-mails, which are sequenced by the sequencing execution unit, with the same location information according to one of the attribute tags of sender, receiver, sending time and receiving time, and to sequence the classified e-mails in an ascending order or in a descending order.

11. The e-mail terminal device according to claim 9, further comprising:
an obtaining unit adapted to obtain a user ID in an sender/receiver attribute tag; wherein
the processing unit comprises:
a second classifying and sequencing unit adapted to classify and sequence a plurality of e-mails according to user IDs in the sender/receiver attribute tags, and to send the e-mails with the same user IDs in the sender/receiver attribute tag to the sequencing execution unit.

12. The e-mail terminal device according to any one of claims 8 to 11, wherein the location information comprises at least one of "From", "To", "Carbon Copy" and "Blind Carbon Copy".

13. A computer readable storage medium, comprising a computer program code executed by a terminal device, wherein the terminal device is triggered to execute the following steps, comprising:
obtaining a user ID of a required user;
obtaining location information corresponding to the user ID by looking up an e-mail;
setting the location information in a pre-defined attribute tag of the e-mail; and
processing a plurality of e-mails in accordance with the attribute tags.
